# EUROPEAN PATENT APPLICATION

(11) **EP 3 142 000 A1**
(43) Date of publication of application: **15.03.2017**
(21) Application number: 16186980.5
(22) Date of filing: 02.09.2016
(51) Int. Cl.: G06F 3/12

(54) **A PRINTING SYSTEM COMPRISING A RASTER IMAGE PROCESSOR UNIT AND A METHOD OF PRINTING BY MEANS OF SAID PRINTING SYSTEM**

(30) Priority: 08.09.2015 EP 15184343
(71) Applicant: OCE-Technologies B.V., 5914 CA Venlo (NL)
(72) Inventor: GERRITS, Antonius Maria, 5914 CA VENLO (NL)
(74) Representative: OCE IP Department

(57) **Abstract**

The invention relates to a printing system for printing a print job, the printing system comprising a receiving unit, a control unit, a raster image processor unit, a print unit and a user interface unit, wherein the receiving unit configured to receive the print job, the raster image processor unit configured to rasterize the print job according to raster image processor settings, the print unit configured to print the rasterized print job, the control unit configured to control the rastering process of the print job and the printing process of the rasterized print job, and the user interface unit being configured for communication between a user of the printing system and the control unit, wherein the control unit comprises an analyzing unit configured to analyse properties of print data of the print job, and an identifying unit configured to identify a raster image processing setting by means of the analysis of the properties of the print data of the print job, which raster image processing setting is irrelevant to process the print data of the print job, and the control unit is configured to notify the user of the printing system with respect to the identified irrelevancy.

The invention also relates to a method suitable for application in the printing system.

## Description

### Field of the invention

The invention relates to a printing system for printing a print job, the printing system comprising a receiving unit, a control unit, a raster image processor unit, a print unit and a user interface unit, wherein the receiving unit is configured to receive the print job, the raster image processor unit is configured to rasterize the print job according to raster image processor settings, the print unit is configured to print the rasterized print job, the control unit is configured to control the rasterizing process of the print job and the printing process of the rasterized print job, and the user interface unit is configured to communicate between a user of the printing system and the control unit.

By the term printing system a system is meant that has a print function, for example a printer, a copier, a multi-functional, a roll-to-roll printer, a roll-to-sheet printer, a cut sheet printer, a flatbed printer, a wide-format printer, a relief printer or a 3D printer.

By the term raster image processor unit is meant a unit comprising a raster image processor which produces a raster image also known as a bitmap. Such a bitmap is used by later stage of the printing system in the print unit to produce the printed output. The input may be print job having page descriptions in a high-level page description language such as PostScript, Portable Document Format, XPS or another bitmap of higher or lower resolution than the print unit. In the latter case, the raster image processor applies either smoothing or interpolation algorithms to the input bitmap to generate the output bitmap.

The term raster image processor may be abbreviated with RIP. The process executed by the raster image processor is also mentioned as "ripping".

The phrase "processing the print job" refers to rasterizing the print data and printing the rasterized print data by means of the print unit of the printing system.

The present invention further relates to a method which is applicable in a printing system according to the invention.

### Background of the invention

Nowadays, a print job with print data is submitted to the receiving unit of the printing system with print job settings also known as print job properties. The RIP is configured to act according to RIP settings for ripping the print data.
A RIP setting may be predetermined as a system setting of the printing system. Hereinafter such a RIP setting is also called a system RIP setting.
A RIP setting may also be a print job setting of the print job properties of the print job. Hereinafter such a RIP setting is also called a print job RIP setting.

The RIP may also be used to enable printing of a colour document on a black and white printer and to enable printing of a black and white document on a colour printer. Pre-flight tools are known which give information about the page description language input of a print job but are not aware of any system RIP setting in the printing system.

Print quality of color jobs is influenced by many RIP settings which are complex and often poorly understood by operators. In case a job does not lead to the desired print quality, an operator may want to change some RIP settings to improve the print quality. However, depending on the print data of the print job one or more RIP settings might have no effect or no influence at all on the printed output of the print job. In other words a RIP setting may be irrelevant for the printed output of the print job.
An object of the present invention is to provide a printing system which helps an operator to act with RIP settings.

### Summary of the invention

The object is achieved in a printing system of the above-mentioned kind, wherein the control unit comprises an analyzing unit configured to analyse properties of print data of the print job, and an identifying unit configured to identify a raster image processing setting by means of the analysis of the properties of the print data of the print job, which raster image processing setting is irrelevant to process the print data of the print job, and the control unit is configured to notify the user of the printing system with respect to the identified irrelevancy.
The invention uses print data of the print job together with RIP settings used to rip the print job. For example, depending on the kind of objects in the print data of the print job, a RIP setting may appear to be not relevant to process the print job. Both the print data analysis and the RIP settings are combined in one place in the software of the control unit and the notification is given without a need for separate print job settings that may aid to detect a suspect combination.
The notification may be an advice to the user on which RIP settings may change and/or improve the output quality of the print job, for example, by disabling a RIP setting that has no influence on the printed output. Disabling an irrelevant RIP setting prevents a user from accidentally changing a RIP setting to make a new print and thus from wasting recording material to be printed upon and operator time.
The notification is given directly on the print job having its current RIP settings without the operator having to manually trigger an extra processing step to determine what objects are embedded in the print data of the print job. Performance of the operator is improved and system computational resources are saved.

According to an embodiment the RIP settings are part of a job ticket of the print job. The RIP settings can be set in a printer driver window for launching the print job or in a print job properties window at the user interface unit of the printing system.

According to an embodiment a raster image processor setting is a setting for switching on or off of a specific functionality of the raster image processor. Such specific functionality may be spot color matching, transparency support and overprint functionality, printing color or black and white, etc. For a print job that does not contain spot colors, the RIP setting for spot color matching has no influence on the printed output and is considered to be irrelevant in this context. If a print job does not use overprinting of objects, a RIP setting for overprint support has no influence on the printed output and is considered to be irrelevant in this context. If a print job does not contain RGB objects but only CMYK objects and/or spot color objects, a RIP setting for rendering RGB objects or for overruling embedded RGB output profiles is considered to be irrelevant. If a print job has only high resolution images embedded and no low resolution images, a RIP setting for image smoothing for low resolution images is irrelevant. A RIP setting for color mapping, e.g. replacing a CMYK color by a spot color, or a spot color by another spot color, may also become irrelevant when spot color matching is switched off.

According to an embodiment the control unit is configured in case of an identified irrelevancy to indicate which settings are able to influence a printed output and which are not able to influence the printed output. A setting which is not able to influence the printed output may be greyed out, disabled, or not shown. When the operator wants to modify the Rip settings for the printed output, he can open the print job properties window at the user interface unit. The user interface screen will show which settings are able to influence the output and which cannot. By doing so the print job is prevented from being printed with irrelevant RIP settings.
The identification of the irrelevancy may be indicated by a digital information item to be displayed near the RIP setting or by disabling or greying out of the RIP setting.

According to an embodiment the action for whether or not solving the identified irrelevancy is a showing of the identified raster image processor setting as irrelevant. Showing a raster image processor setting as irrelevant may be done by disabling the raster image processor setting or greying the raster image processor setting.

According to an embodiment the identified raster image processor setting is a setting for a specific functionality of the raster image processor unit while the analyzing unit concludes from the print data of the print job that the specific functionality is irrelevant and does not influence the ripping of the print data of the print job.

According to an embodiment the identified raster image processor setting is one out of a raster image processor setting for switching between enabling and disabling spot color matching, a raster image processor setting for switching between enabling and disabling overprint support, a raster image processor setting to mimic a spot color which is not present in the print data of the print job, and a raster image processor setting for using a color mapping table.

According to an embodiment the printing system comprises a prepress application unit, and the control unit is configured to communicate the raster image processor settings to the prepress application unit and the prepress application unit is configured to identify an irrelevancy of at least one raster image processing setting by means of the prepress application running on the prepress application unit. By communicating the available RIP settings by the control unit of the printing system to the prepress application, a prepress operator is able to already focus on relevant print job RIP settings at job submission time and will not loose time to sort out print job RIP settings which are irrelevant for the print job.

The invention further relates to a method for printing a print job by a printing system, the method comprising the steps of receiving the print job at the printing system, rasterizing the print job according to raster image processor settings, and printing the rasterized print job, wherein the method further comprises the steps of analyzing properties of print data of the print job, identifying a raster image processor setting by means of the analysis of the properties of the print data which raster image processor setting is irrelevant for processing the print job, and notifying a user of the printing system of an identified irrelevancy of at least one RIP setting. The notification will help the operator to choose which of a usually large number of possible RIP settings he may want to change to influence the final printed output.

According to an embodiment of the method the identified raster image processor setting is one out of a raster image processor setting for switching between enabling and disabling spot color matching, a raster image processor setting for switching between enabling and disabling a transparency support, a raster image processor setting to mimic a spot color which is not present in the print data of the print job, and a raster image processor setting for using a color mapping table.

The invention also relates to a computer-program product embodied on a non-transitory computer readable medium and configured to execute a method according to the invention when executed on a processor.

The invention also relates to a non-transitory data carrier having stored thereon the computer-program product mentioned here-above.

### Brief descriptions of the drawings

Embodiment examples will now be described in conjunction with the drawings, wherein:
- Fig. 1: is a block diagram of a printing system according to the invention;
- Fig. 2: illustrates a user interface window of the printing system showing a print queue of submitted print jobs according to the invention;
- Fig. 3: illustrates a user interface window of the printing system showing print job properties of a print job selected from the print queue according to the invention; and
- Fig. 4: is a flow diagram of an embodiment of the method according to the invention.

### Detailed description of the embodiments

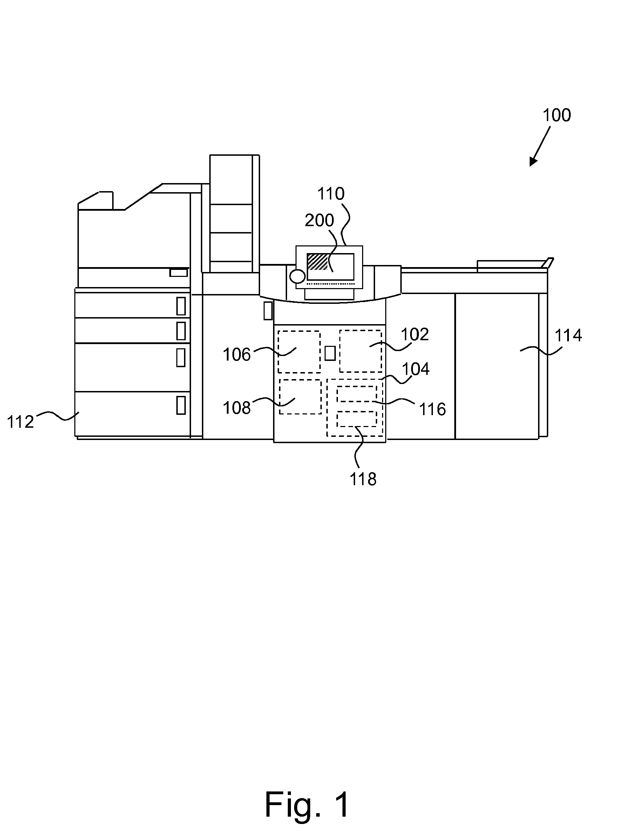

As an illustrative example, Fig. 1 shows schematically a printing system 100 for printing a print job. The printing system 100 comprises a receiving unit 102, a control unit 104, a RIP unit 106, a print unit 108 and a user interface unit 110.
The various parts of the printing system 100 are controlled by the control unit 104, directly or through the agency of sub-control modules 102, 106, 108, 116, 118, 110. The receiving unit 102, the raster image processor unit 106 and the print unit 108 are connected to the control unit 104, which is also connected to the user interface unit 110 provided with user interface window 200 with operator control elements and a display element, for example an LCD screen in the form of a touch screen for use by an operator at the printing system 100.
When a print job is received by the receiving unit 102, the received print job is processed by the RIP unit 106. The RIP unit 106 is configured to rasterize the print job according to predetermined system RIP settings and according to print job RIP settings of a print job submitted to the receiving unit 102. When the print job is rasterized into a bitmap, the bitmap is positioned in a digital print queue of scheduled print jobs to be printed. When the bitmap arrives at the head of the print queue, the bitmap will be printed by the print unit 108. The print job will be printed on media loaded in one of the input trays 112. The media is guided along a paper path (not shown) to the print unit 108. After the bitmap is printed on the media, the printed media is guided to an output tray 114. The control unit 104 is configured to control the rastering process of the print job and the printing process of the rasterized print job. The user interface unit 110, e.g. a digital work station, is configured to communicate between a user of the printing system 100 and the control unit 104.
The control unit 104 comprises an analyzing unit 116 configured to analyse properties of print data of the print job, and an identifying unit 118 configured to identify irrelevant RIP settings including system RIP settings and print job RIP settings according to the invention.

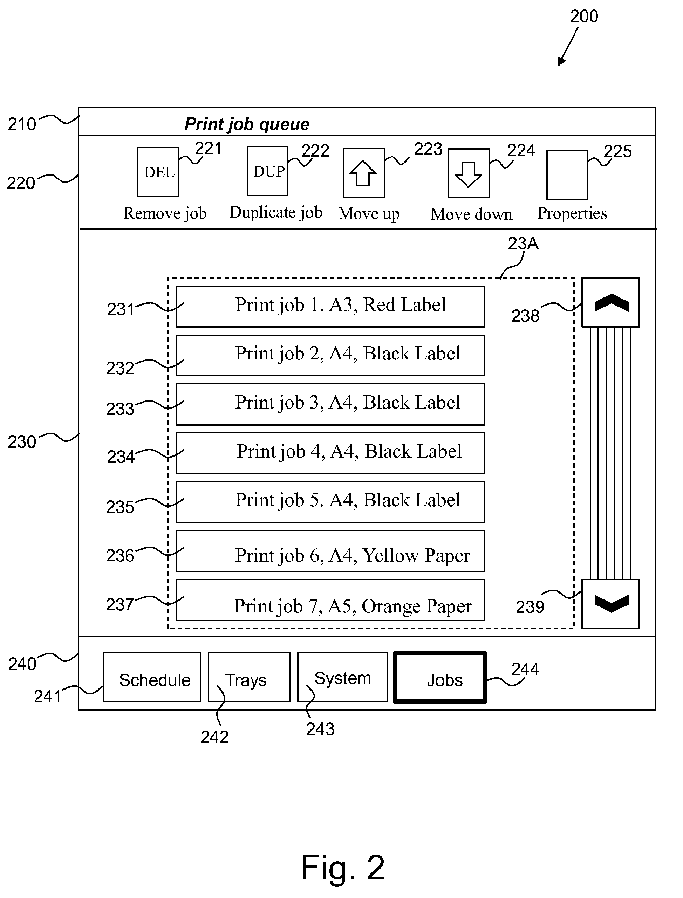

The user interface 110 has a control panel with a display e.g. in the form of a touch-sensitive screen which, in this example, shows a user interface window 200. The user interface window 200 is shown in detail in Fig. 2.

Fig. 2 shows the user interface window 200 of the printing system 100 according to the invention. In an alternative embodiment part of the functionality - like buttons - of this user interface window is designed as hardware buttons near the user interface window 200. The user interface window 200 is opened at the user interface unit 110 in Fig. 1 and shows a representation of the print queue residing in the control unit 104 in Fig. 1.

The user interface window 200 comprises a title section 210, a user action section 220, a print queue section 230 and a navigation section 240.

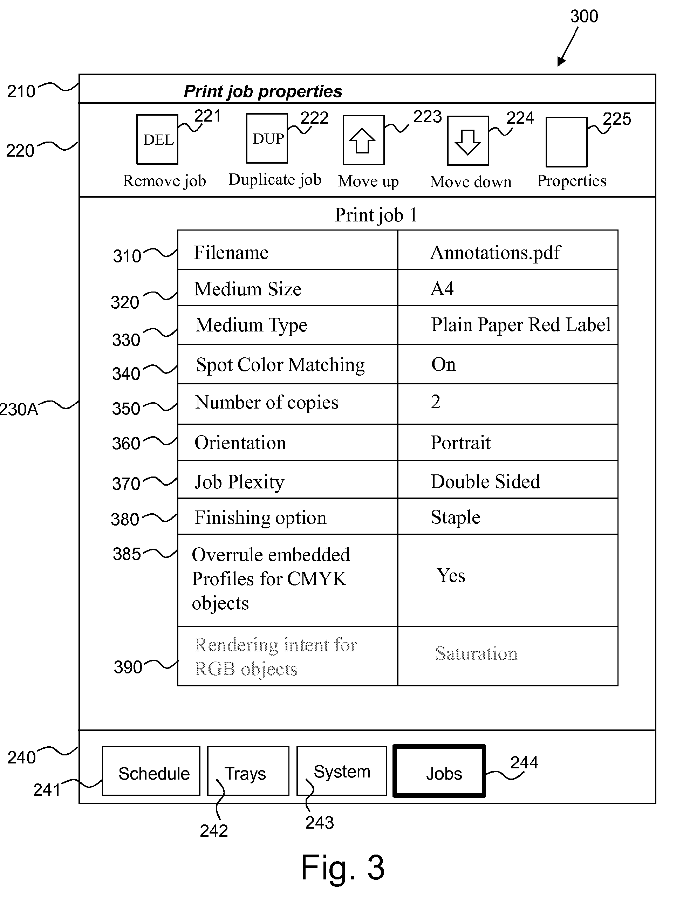

The user action section 220 comprises user operable items 221 - 225 to be selected for executing actions on one or more selected print jobs in the print queue 23A in the print queue section 230.
A first user operable item 221 represents a job removal action.
A second user operable item 222 represents a job duplication action.
A third user operable item 223 represents a move up action.
A fourth user operable item 224 represents a move down action.
A fifth user operable item 225 represents an action to retrieve and display properties and settings of a selected print job in a properties window as shown in Fig. 3.

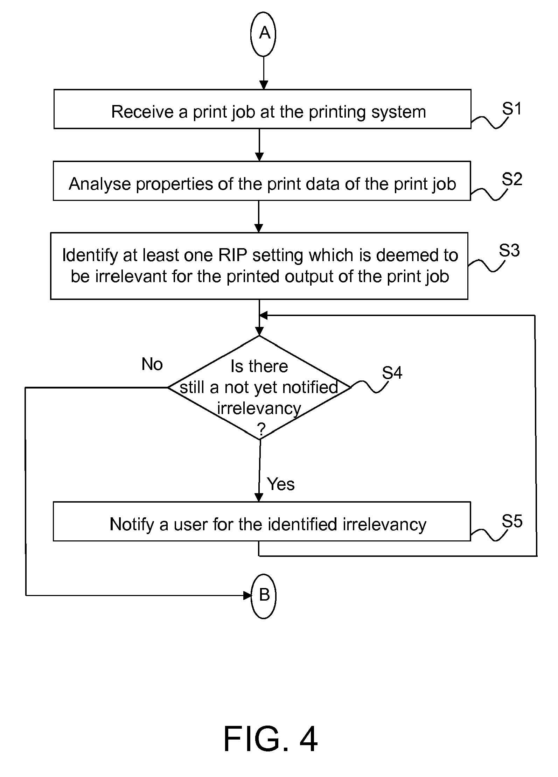

The navigation section 240 comprises a first user operable item 241 for navigating to a schedule with a timeline and media needed for the print jobs, a second user operable item 242 for navigating to an overview of the input trays 112 (See Fig. 1) and the content of the input trays, a third user operable item 243 for navigating to the system settings shown in Fig. 4, and a fourth user operable item 244 for navigating to the print jobs in the print queue 23A.

The print queue section 230 comprises a representation of the print queue 23A. The print queue 23A may be empty or comprises at least one print job. Fig. 2 shows a plurality of print jobs 231 - 237 in the print queue 23A in a sequence order from top to bottom. A first print job 231 will be printed real soon after the current print job (not shown) that is currently printed by the printing device is ready. A last print job 237 will be printed if the preceding print jobs 231 - 236 are ready. Each print job 231 - 237 in the print queue 23A is selectable by a mouse or by a finger or stylus in case of a touch screen. A sequence order of the print jobs 231 - 237 in the print queue 23A may be changed by selecting a print job in the print queue 23A and then activating the third user operable item 223 or the fourth user operable item 224 in order to move the selected print job one position up or down respectively in the print queue 23A. In a further embodiment in case of a touch screen a position of a print job 231 - 237 in the print queue 23A may be changed by dragging and dropping the appropriate print job to another position in the print queue. The print queue 23A is scrollable by activating an upward scrolling button 238 or a downward scrolling button 239. Each print job 231 - 237 in the print queue 23A may be displayed with a number of properties of the print job, such as an identifying name of the print job ("Print job 1 "), a size of the image receiving material to be used for the print job ("A3"), the medium type of the image receiving material ("Red Label"), etc. For convenience reasons a small relevant number of properties for each print job 231 - 237 is displayed in the print queue 23A.
RIP settings may be offered both on system level of the printing system or on print job level. A property of the print job may be a print job RIP setting. The analyzing unit 116 will determine whether a system RIP setting and/or a print job RIP setting will be actually used while processing the print job.

Fig. 3 illustrates a display window 300 of a user interface of the printing system showing the print job properties and settings of print job 231 (See Fig. 2) after selecting the first print job 231 and activating the fifth user operable item 225 (See Fig. 2).

The print job properties and settings may comprise a file name 310, a medium size 320, a medium type 330, a spot color matching indication 340, a number of copies 350, an orientation 360 (portrait / landscape), a print job plexity indication 370 (single sided / double sided) a finishing option 380 like Staple, Binding, an indicator 385 for overruling embedded color profiles for CMYK objects in the print data, a rendering intent 390 for RGB objects like a saturation option, a relative colorimetric option, an absolute colorimetric option and a perceptional option, etc. The spot color matching indication 340, the indicator 385 and the rendering intent 390 are examples of a print job RIP setting.
The indicator 385 for whether or not overruling embedded color profiles for CMYK objects is deemed to be irrelevant when the print data contains no CMYK objects. The selection "Saturation" for the rendering intent 390 does not influence the printed output of the print job, if the print data does not contain an RGB object. In this case the rendering intent 390 is greyed out, since the analyzing unit has determined that the print data of the print job does not contain any RGB objects.

The file name 310 has an extension ".pdf" which indicates that the print data has a portable document format. The print data of the pdf file 310 comprises spot colors. The analyzing unit 116 (See Fig. 1) configured to analyse properties of print data of the print job analyses the print data and - for example - retrieves spot color use from the print data. For example, spot colors A, B, C are found to be used in case of printing the pdf file 310.

Another example of an irrelevancy of a RIP setting is that the print job does not use overprinting of objects in the print data of the print job, while a system RIP setting is set to "Transparency support on". In this context the system RIP setting has no influence on the print output of the print job and is considered irrelevant.
Another example of irrelevancy of a RIP setting is that the print job does not contain RGB objects in the print data of the print job but only CMYK and/or spot color objects, while the print job setting 390 for a RGB rendering intent as shown in Fig. 3.
Another example of irrelevancy of a RIP setting is a print job setting 385 (See Fig. 3) or system setting for overruling an embedded output color profile for CMYK objects while the print data contains only RGB color objects. In this context the print job setting 385 has no influence on the print output of the print job and is considered irrelevant. Another example of a discrepancy between the print data and RIP settings is that the print job has only high resolution images embedded and no low resolution images, while a print job setting "image smoothing" (not shown) is set to "on".

The disabling/greying of at least one print job setting as shown in Fig. 3 due to an identified irrelevancy gives the user advice on which settings may change and/or improve the output quality of the print job. This is advantageous since disabling such a RIP setting or such a print setting prevents a user from accidentally changing such a setting to make a new proof print. While the user might expect a changed proof print the user actually only made a second copy of a previous print. By disabling irrelevant settings waste of paper and user time is prevented.

The information of an irrelevant print job setting as shown in Fig. 3 is given directly on the print job having its current print job settings without the user having to manually trigger an extra processing step to determine what objects are embedded in the print data of the print job and then afterwards the print job needs to be reprocessed again in a normal way to get a final desired output. This direct feedback improves performance and saves system computational resources.

Other kind of user operable digital objects for representing print jobs, print job settings and menu items may be envisioned on the respective user interface windows shown in Fig. 2 - 3.

An embodiment of the method according to the invention is explained in Fig. 4. A starting point A in Fig. 4 leads to a first step S1.

In the first step S1 a print job is received at the printing system. The receiving unit of the printing system is configured to receive the print job and store a received print job in a digital storage of the printing system.
In a second step S2 properties of print data of the print job are analysed. The analysing unit residing in the control unit is configured to analyse the print data and its properties.

In a third step S3 the properties of the analysed print data are compared with the RIP settings in order to identify one or more irrelevant RIP settings. An identifying unit residing in the control unit is configured to compare the RIP settings with the analysed print data and to identify at least one RIP setting which is deemed to be irrelevant for the printed output of the print job.

In a fourth step S4 it is checked by the control unit if there is still a not yet notified identified irrelevancy of a RIP setting. If so, the method proceeds to a fifth step S5. Otherwise the method ends in an end point B.

In the fifth step S5 a user of the printing system is notified for the identified irrelevancy of the identified RIP setting when the print job properties window is opened by the user on the user interface unit. The notification is in the form of disabling or greying irrelevant RIP settings on the print job properties window. According to an alternative embodiment the identified irrelevant RIP setting is left out of the print job properties window.
The irrelevancy may be detected between the properties of the print job and a RIP setting value of a specific functionality of the RIP unit which setting is switched on while the analyzing unit concludes from the print data of the print job that the specific functionality is irrelevant to be used while ripping the print data of the print job.
The identified irrelevancy of a RIP setting may concern a RIP setting for switching between enabling and disabling spot color matching, a RIP setting for switching between enabling and disabling overprint support, a RIP setting using a color mapping table, etc.
After the fifth step S5 the method returns to the fourth step S4 in order to check for more identified irrelevancies to be notified.

The method ends in the end point B.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure.

## Claims

1. Printing system for printing a print job, the printing system comprising a receiving unit, a control unit, a raster image processor unit, a print unit and a user interface unit,
the receiving unit configured to receive the print job,
the raster image processor unit configured to rasterize the print job according to raster image processor settings,
the print unit configured to print the rasterized print job,
the control unit configured to control the rastering process of the print job and the printing process of the rasterized print job, and
the user interface unit configured for communication between a user of the printing system and the control unit,
wherein
the control unit comprises
an analyzing unit configured to analyse properties of print data of the print job, and
an identifying unit configured to identify a raster image processing setting by means of the analysis of the properties of the print data of the print job, which raster image processing setting is irrelevant to process the print data of the print job,
and the control unit is configured to notify the user of the printing system with respect to the identified irrelevancy.

2. Printing system according to claim 1, wherein a raster image processor setting is a setting for switching on or off of a specific functionality of the raster image processor.

3. Printing system according to any of the preceding claims, wherein the control unit is configured in case of an identified irrelevancy to indicate which settings are able to influence a printed output of the print job and which are not able to influence the printed output of the print job.

4. Printing system according to any of the preceding claims, wherein the action for whether or not solving the identified irrelevancy is a showing of a raster image processor setting as irrelevant.

5. Printing system according to any of the preceding claims, wherein the identified raster image processing setting is a setting for a specific functionality of the raster image processor unit while the analyzing unit concludes from the print data of the print job that the specific functionality is irrelevant and the specific functionality does not influence ripping of the print data of the print job.

6. Printing system according to any of the preceding claims, wherein the identified raster image processor setting is one out of a raster image processor setting for switching between enabling and disabling spot color matching, a raster image processor setting for switching between enabling and disabling overprint support, a raster image processor setting to mimic a spot color which is not present in the print data, and raster image processor setting for using a color mapping table.

7. Printing system according to any of the preceding claims, wherein printing system comprises a prepress application unit, and the control unit is configured to communicate the raster image processor settings to the prepress application unit and the prepress application unit is configured to identify an irrelevancy of at least one raster image processing setting by means of the prepress application running on the prepress application unit.

8. Method for printing a print job by a printing system, the method comprising the steps of
- receiving the print job at the printing system,
- rasterizing the print job according to raster image processor settings, and
- printing the rasterized print job,
wherein
the method further comprises the steps of
analyzing properties of print data of the print job,
identifying a raster image processing setting by means of the analysis of the properties of the print data of the print job which raster image processing setting is irrelevant for processing the print job, and
notifying a user of the printing system of an identified irrelevancy.

9. Method according to claim 8, wherein the identified raster image processor setting is one out of a raster image processor setting for switching between enabling and disabling spot color matching, a raster image processor setting for switching between enabling and disabling overprint support, a raster image processor setting for a spot color which is not present in the print data, and a raster image processor setting for using a color mapping table.

10. Computer-program product embodied on a non-transitory computer readable medium and configured to execute a method according to any of claims 8-9 when executed on a processor.

11. A non-transitory data carrier having stored thereon the computer-program product according to claim 10.
